# EUROPEAN PATENT APPLICATION

(11) **EP 3 616 866 A1**
(43) Date of publication of application: **04.03.2020**
(21) Application number: 18792342.0
(22) Date of filing: 05.04.2018
(51) Int. Cl.: B28C 5/00, B28C 5/20, B01F 9/02

(54) **METHOD FOR PRODUCING A CONCRETE MIX BY RECYCLING RESIDUES THEREOF, AND MIXER**

(30) Priority: 26.04.2017 RU 2017114810; 22.11.2017 RU 2017140662
(71) Applicant: Kogan, Artem Sergeevich, Moscow 125252 (RU)
(72) Inventor: Kogan, Artem Sergeevich, Moscow 125252 (RU)
(74) Representative: Osmans, Voldemars
(86) International application number: PCT/RU2018/000219
(87) International publication number: WO 2018/199806

(57) **Abstract**

A method for producing a concrete mixture by recycling previously produced residues of said mixture, comprising the following steps: cleaning residues of a mixture from the walls of a tank by means of a mechanical action of inert components of the concrete mixture loaded in said tank, and then emptying the tank and loading the mixture produced into a mixer, which is weighed. After dry cleaning of the tank walls, said tank is filled with water for additionally removing residues of the mixture, and the mixture produced after wet cleaning is loaded into the mixer and weighed again. Additional components of the concrete mixture are then added and mixing is performed. A control system governs the steps for producing the concrete mixture. A mixer is used which comprises a drum rotatably mounted on a support, and a blade, attached to a shaft, for mixing and for cleaning the inner surface of the drum.

## Description

### Field of invention

The invention is related to construction industry, particularly to the methods for producing mixtures containing binding components, for example concrete, and also to a construction equipment, namely, gravity-type mixers, and is intended for the production of concrete and other mixtures.

### Background

In the prior art, a method for recycling of industrial waste in the production, delivery and laying of concrete is known, as well as a plant for implementing the method (German patent application DE4431632, B01D21/32; B03B13/00; B03B9/06, published 03/07/1996). This solution is designed and intended for extracting and reusing residues, in particular, residues of concrete. When implementing the method, the separation into a coarse fraction and a residual fraction is performed, and the residual fraction is returned to the production process. The density and mass of the residual fraction is measured before returning to the mixing plant, where the solid material is re-produced. In addition, this application offers the installation featuring residual fraction measurement capabilities inside the feed channel while supplying the fraction to the mixing plant. The radiometric unit performs the nonintrusive measurement of sediment density. The mass measurement device determines the mass of the residual fraction using a scale or flow meter. This technical solution describes an expensive method implemented in a specialized enterprise, and cannot be applied in limited space.

In the prior art, a mobile device for processing residual concrete mixture is known (utility model CN203185500, B01D36/04; B28C9/00, published 11.09.2013). This solution discloses a mobile device for the recycling of residual concrete mixture. The device contains a feed chute for water used to flush the vehicle, a sand and stone separation unit, a hydrocyclone separation system, a mixing box, a pipeline system, a filter pressing system and an automatic control unit. The sand and stone separation unit includes a concrete mixture separator and a screen for separating sand and stone; the hydrocyclone separation system contains a hydrocyclone separator with a chute. Compared with the prior art, a mobile device for processing residual concrete mixture allows to reuse concrete mixture, and has certain advantages, in particular: the device mixer is made as a mixing box, which eliminates the need for additional cleaning of the mixer when using this device and improves the device usability; the vibration motor is mounted on a frame with a chute for unloading material from the flushed vehicles, which increases the smoothness of the material feed. The disadvantage of this device is a large amount of polluted water, which must be cleaned for subsequent use in a complex and expensive way.

In the prior art, a system and method for reusing slime water and other wastes in the production of concrete mixtures is known (patent CN102320082, B28C9/02, published 01/18/2012). The system contains mixer, transport system, flushing equipment for removing concrete mixture wastes, pumping system, equipment for separating washed sand from washed concrete, a reservoir for storing polluted water until subsequent water treatment, monitoring equipment that controls the level of solids in the cleaned water, and sewage pump for pumping purified water into the mixer. Full cleaning and reuse of water used to remove concrete mixture wastes from the mixer, the transportation system and the pumping system, saves enterprise resources, provides economic benefits, solves the problem of pollution from concrete production and provides for cleaner production. The disadvantage of this system is large amount of polluted water, which must be cleaned for subsequent use in a complex and expensive way.

In the prior art, a gravitational-type mixer is known, containing a mixing drum connected to a rotational drive and mounted on supporting racks of a mixing drum with inside blades rigidly fixed on its inner surface (SU1175719, B28C5/04, published 08/30/1985).

Also in the prior art, a gravitational-type mixer is known, containing a drum with internal blades and drum rotational drive, wherein the drum consists of a loading and unloading part in the form of a truncated cone, a middle cylindrical part, and a bottom in the form of a ball segment, as well as blades made with end blades bends and attached to the cylindrical part of the drum at an angle to its axis so that the blades occupy a horizontal position in the lower part of rotating drum (RU2132772, B28C5/18, published 07/10/1999).

A disadvantage of the known mixers is the adhesion of the concrete mixture to the inner surface of the mixing drum and the blades. To clean the mixers from the residual concrete mixture, the drum is usually washed from the inside with water. This method of drum cleaning leads to the formation of sludge from the residua mixture and water, the disposal thereof is associated with a number of problems (the need to build additional facilities for the disposal of previously obtained concrete mixture residues, the need to deliver the sludge to such facilities and other works), as well as to the significant improper consumption of the mixture.

### Summary of the invention

The problem to be solved by the invention is to create an effective method of producing concrete mixture with the recycling of residues of previously produced mixture, that allows significant reducing of the amount of production residues and wastes without decreasing the strength and binding characteristics of concrete. An additional problem to be solved by this invention is to ensure the production of concrete mixture in the construction operations environment.

Further, problem to be solved by the device is to improve the design of the gravitational mixer with the elimination of the disadvantages inherent in the above-mentioned analogues, as well as expanding the arsenal of technical means for the specified purpose.

The technical result of the claimed group of inventions is to simplify the technological cycle of recycling of residual concrete mixture by eliminating operations for the extraction and processing of inert components as well as properly using of cement, water and chemical additives contained in residual concrete mixture, to improve the quality of unloading ready-mixed concrete and cleaning the inner surface of the mixing drum and blades after operation of the mixer, to reduce the amount of mixture remaining on the inner surface of the drum and blades after operating and cleaning the mixer, and to increase the amount of the properly used mixture.

The claimed technical result is achieved by a method for producing a concrete mixture with the recycling of residues of previously produced mixture, wherein the inert components (broken stone and sand of the corresponding fractions included in the recycled residues) are loaded into the tank with recycled residues of concrete mixture in the amount specified by the process control system; using these components, the mechanical cleaning of the tank walls (hereinafter referred to as "dry cleaning") from the recycled residues of the concrete mixture is performed, the resulting mixture of inert components with recycled residues of the concrete mixture (hereinafter referred to as "mixture after dry cleaning") is loaded into the mixer, wherein the resulting mixture after dry cleaning is weighed, and the obtained data are fed into the process control system.

After dry cleaning of the tank walls and loading the obtained mixture after dry cleaning into the mixer, the water is poured into the tank in the amount specified by the process control system to further cleaning the tank walls (hereinafter referred to as "wet cleaning") from recycled residues of the concrete mixture; the resulting mixture of water with recycled residues of the concrete mixture (hereinafter referred to as "mixture after wet cleaning") is loaded into the mixer, wherein the obtained mixture after dry cleaning is weighed again with the mixture after wet cleaning, and the data are fed into the process control system. Based on the results of weighing at the previous stages and information about the loaded amount and composition of inert materials and water, the process control system determines the amount of components required for the production of concrete mixture with a specific composition required for loading into the mixer.

In addition, the claimed technical result for the mixer, containing mixing drum connected to a rotational drive and rotationally mounted on a support is achieved due to the fact that the mixer contains a shaft with a blade fixed on it for the mixing of the mixture and cleaning the inner drum surface, wherein the shaft is fixed by means of movable joints on the drum handle with the possibility of adjusting the gap between the blade and the inner drum surface.

It is advisable to make the blade in the form of a plate with a through hole, and the outer contour of the plate at least partially repeats the shape of the inner drum surface. It is advisable to arrange the shaft in the rigidly interconnected joint bearings.

It is advisable to use one through and one solid bearing.

It is advisable to make the holes for large and small locking pins in the shaft, and to provide for the hole in one of the bearings for a small locking pin that coincides with the hole in the shaft.

It is advisable that the bearings are attached to the drum handle through a cylindrical hinge.

It is advisable that the drum contains shaft fixing brackets located opposite each other on the upper rim of the drum.

It is advisable to equip the shaft with a removable fixing device that prevents longitudinal displacement of the shaft.

Distinctive features of the claimed method for producing concrete mixture is the separation of the tank cleaning process into two stages: at stage 1, the mechanical cleaning is performed without water by loading inert components, and at stage 2 - cleaning with addition of small amount of water. The quantity, type and fraction of the loaded inert components, as well as the volume of water and chemical additives used are determined in advance based on the composition of the concrete mixture stored in the process control system and the tank volume. Thus, it is not necessary to separate the residual concrete mixture into fractions during the recycling process, which simplifies the technological cycle of their recycling.

Using data on the initial composition of the concrete mix and the quantitative composition of the mass obtained from the weighing results allows for accurate calculation of the amount of components required to produce a new batch of concrete mixture, which increases the efficiency of using all components, in particular, cement, water and chemical additives.

All operations of the method are carried out directly on the construction site, which reduces transport costs. The technological process eliminates the use of polluted water, usually obtained as a result of wet cleaning, which improves the quality of the concrete mixture and the environmental performance of the process.

A distinctive feature of the claimed mixer is a shaft with a blade fixed on it, intended for mixing the mixture and cleaning the inner drum surface, wherein the shaft is fastened on the drum handle by flexible joints with the possibility of adjusting the gap between the blade and the inner drum surface.

### Brief description of the drawings

The drawings of the application are presented in a form sufficient for the understanding of those skilled in the art, and in no way limit the breadth of protection. In the drawings, the same elements have the same reference numbers.

It should be noted that the figures show only those operations that require clarification, while the individual operations of the proposed method are clear to the person skilled in the art and do not require additional illustrations.
FIG. 1 shows a method for loading components of a concrete mixture and a method for unloading the produced mixture in the construction site environment.
FIG. 2 shows a method for loading components of a concrete mixture and a method for unloading the produced mixture at the factory.
FIG. 3-4 show the shaft with a blade designed for mixing the mixture and cleaning the inner drum surface.
FIG. 5-9 show the mixer with a different disposition of the blade and the drum for the loading of components, mixing the mixture, unloading the mixture and cleaning the inner drum surface.

### Embodiments of the method

An embodiment of the method depends on the conditions in which it is used.

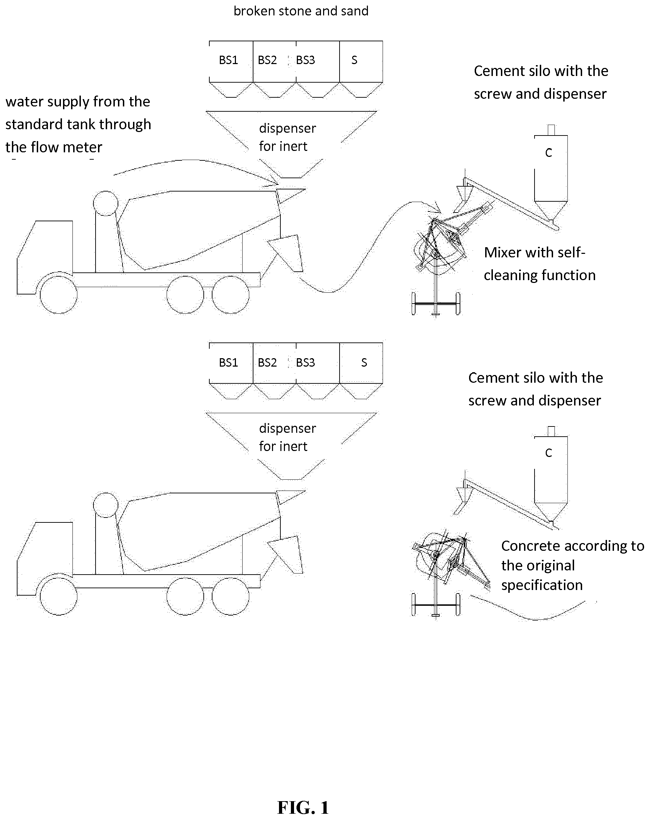

As an example of the implementation of the proposed method in accordance with FIG. 1, a method for producing a concrete mixture at a construction site will be considered, involving the recycling of residues of the previously obtained mixture that remain on the tank walls (for example, a truck mixer) and are not subsequently used in the production of high-quality concrete mixture.

This technology makes it possible to recycle the residues of the concrete mixture from the tank for the production of the concrete mixture so that the mixture obtained corresponds to a given composition, has similar strength and binding properties and can be used as a binding layer between the main concrete layers. This process ensures the structural integrity of the concrete structure.

After receiving the concrete mixture from the plant and its intended use, the tank containing the mixture is cleaned directly on the construction site. The inert components are loaded into the tank in an amount previously calculated by the process control system on the basis of the concrete mixture specification stored in the control system. For dispensing inert components used for cleaning, a dispenser system is applied. The inert components for cleaning a truck mixer can be loaded in various ways: a belt conveyor, a skip hoist, gravity flow, etc. One of the particular cases of loading the inert components in the cleaned truck mixer may provide the arrival of the truck mixer on a construction site with a trailer contained enough broken stone and sand for cleaning. After loading the inert components into the tank, the dry cleaning of its walls from the recycled residues of the concrete mixture begins, carried out by mechanical action of the loaded inert components on the recycled residues of the concrete mixture on the tank walls, resulting in a mixture after dry cleaning. In addition, the inert components partially beat off the previously hardened concrete mixture which allows to partially cleaning the tank from the older layers of the mixture. In turn, the amount of such cleaning waste can be neglected, because they do not have any impact on the quality of the mixture due its low percentage < 1%.

The duration of the dry cleaning of the tank depends on its design, concrete workability grade and type of inert aggregate.

| Volume (capacity) of the concrete mixer loading (liters) | Minimum duration of dry cleaning (seconds) | | | | | |
|---|---|---|---|---|---|---|
| | in forced action mixers, regardless of the workability grade, depending on W/C ratio (water-cement ratio) | | | In truck mixers and gravity mixers, depending on the workability grade | | |
| | up to 0.3 | 0.3-0.4 | from 0.4 | ZH1/P1 | P2 | P3-P5 |
| up to 750 (incl.) | 80 | 60 | 50 | 90 | 75 | 60 |
| 750-1500 | 100 | 70 | 50 | 120 | 105 | 90 |
| above 1500 | 120 | 80 | 50 | 150 | 135 | 120 |

Minimum duration of dry removal (seconds) the light concrete mixtures with porous aggregates in forced action mixers:

| Volume (capacity) of the concrete mixer loading (liters) | Depending on the average concrete density, kg/m³ | | | |
|---|---|---|---|---|
| | up to 1000 | 1000-1400 | 1400-1600 | from 1600 |
| up to 750 (incl.) | 180 | 150 | 120 | 105 |
| 750-1500 | 210 | 180 | 150 | 120 |
| above 1500 | 240 | 210 | 180 | 135 |

The table lists the data for the concrete mixture P1. Change of cleaning duration relative to other concrete mixtures grades (in seconds):
   - Dry mixtures: ZH1 +15, ZH2 +30, ZH3 +45, ZH4 +60, ZH5 +75 (time increment);
   - Easily workable mixtures: P2 -15, P3 -30, P4 -45, P5 -60 (time decrement);
   - Concrete grouts: R1 +5, R2 +10, R3 +15, R4 +20 (mixing time increase).

After performing a dry mechanical cleaning, the obtained mixture after dry cleaning is loaded into a mixer, wherein the obtained mixture after dry cleaning is weighed, and the results are stored in the process control system. Loading the mixture after dry cleaning from the truck mixer to the mixer can also be carried out in different ways: gravity flow, belt conveyor, etc.

After that, an amount of water (or water solution with chemical additives, if any chemical additives are contained in the original concrete mixture) determined by the process control system is poured into the tank for wet cleaning, which allows to remove the residues of the recycled concrete mixture from the tank walls. Cleaning water can be taken from the truck mixer tank or from any other source available on the construction site. The resulting mixture after wet cleaning, namely a mixture of water with recycled residues of the concrete mixture, is loaded into a mixer, wherein the mixture after dry cleaning together with the mixture after wet cleaning are re-weighed, and the results are stored in the process control system.

Further, the process control system, based on the data obtained as a result of weighing the mixture after dry cleaning, together with the mixture after wet cleaning, as well as information about the loaded amount and composition of inert components and water, calculates the required amount of cement, inert components, water and, if necessary, chemical additives to obtain the initial concrete mixture composition. After that, dosing takes place with the subsequent loading of cement, inert components, water and, if necessary, chemical additives into the mixer, wherein all components are mixed to produce a concrete mixture.

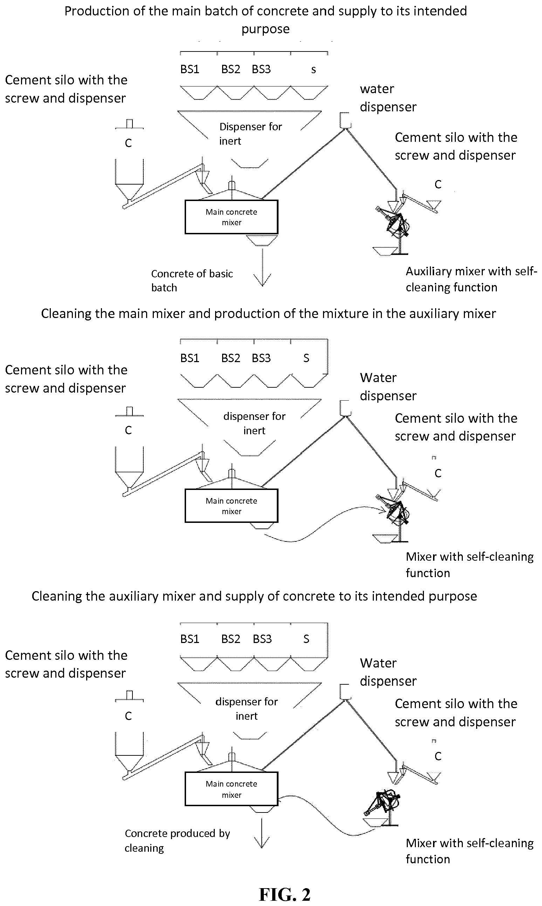

As an example of the implementation of the proposed method in accordance with FIG. 2, a method for producing a concrete mixture at a plant will be considered, involving the recycling of residues of the previously obtained mixture that remain on the tank walls (for example, a concrete mixer) and are not subsequently used in the production of high-quality concrete mixture.

This technology makes it possible to recycle the residues of the concrete mixture from the tank for the production of the concrete mixture so that the mixture obtained corresponds to a given composition, has similar strength and binding properties, reduces waste, and provides for cleaner production.

After unloading the concrete mixture from the tank, the inert components are loaded into the tank in an amount previously calculated by the process control system on the basis of the concrete mixture specification stored in the process control system. For dispensing inert components used for cleaning, a plant dispenser system is applied. After loading the inert components into the tank, the dry cleaning of its walls from the recycled residues of the concrete mixture begins, carried out by mechanical action of the loaded inert components on the recycled residues of the concrete mixture on the tank walls, resulting in a mixture after dry cleaning. In addition, the inert components partially beat off the previously hardened concrete mixture which allows to partially clean the tank from the older layers of the mixture. In turn, the amount of such cleaning waste can be neglected, because they do not have any impact on the quality of the mixture due its low percentage < 1%.

After performing a dry cleaning, the obtained mixture after dry cleaning is loaded from the tank into an additional mixer, wherein the obtained mixture after dry cleaning is weighed, and the results are stored in the process control system.

After that, an amount of water (or water solution with chemical additives, if any chemical additives are contained in the original concrete) determined by the process control system is poured into the tank for wet cleaning, which allows to remove the residues of the recycled concrete mixture from the tank walls. The resulting mixture after wet cleaning, namely a mixture of water with recycled residues of the concrete mixture, is loaded into a mixer, wherein the mixture after dry cleaning together with the mixture after wet cleaning are re-weighed, and the results are stored in the process control system.

Further, the process control system, based on the data obtained as a result of weighing the mixture after dry cleaning together with the mixture after wet cleaning that are loaded from the tank after the cleaning, as well as information about the loaded amount and composition of inert components and water, calculates the required amount of cement, inert components, water and, if necessary, chemical additives to obtain the initial concrete mixture composition. After that, dosing takes place with the subsequent loading of cement, inert components, water and, if necessary, chemical additives into the additional mixer, wherein all components are mixed to produce a concrete mixture.

The claimed technology has a number of features. The table below describes the dependence of the percentage of the inert components used to clean tanks, and the maximum possible amount of inert components, loaded during normal operation for different tanks and different broken stone fractions. The most common cases are presented, but other cases are also possible:

| | 40-70 mm | 20-40 mm | 5-20 mm |
|---|---|---|---|
| Ready mix truck (mixer) | 15% | 14% | 13% |
| Gravity mixer | 15% | 14% | 13% |
| Turbine mixer | 13% | 12% | 10% |
| Turbine mixer with activator | 13% | 12% | 10% |
| Planetary mixer | 13% | 12% | 10% |
| Single-shaft mixer | 9% | 8% | 7% |
| Double-shaft mixer | 9% | 8% | 7% |

Based on practical experience, the possibility of using different amounts of water for the second stage of tank cleaning, depending on the presence of chemical additives in the initial concrete composition, has been revealed.

| Type of chemical additive | Influence on tank cleaning quality | Ability to reduce the amount of water Influence on technology |
|---|---|---|
| Superplasticizing agents | Improvement | 20% |
| Setting retarders | Improvement | 10% |
| Setting accelerators | Degradation | To add to the auxiliary mixer after tank cleaning |
| Stabilizers | Improvement | 5% |
| Water-retaining agents | Improvement | 3% |

In addition, there are chemical additives that do not affect the quality of tank cleaning, namely: antifreeze, air-entraining, density and porosity regulating, hydrophobic, anti-corrosion, deformation controlling, anti-radiation, increasing electrical conductivity, and bactericidal additives.

In the case of use of polyfunctional complex additives, the effect of the additive on the degree of reduction in the amount of water used for wet cleaning of a tank depends on the complex effect of a particular composition and can be further evaluated in actual practice.

The use of this technology significantly simplifies the process of recycling of residual concrete due to the absence of the need for separation of inert components fractions (broken stone and sand), and also allows to dispose the residues without using special production facilities. This technology increases the efficiency of water, cement and chemical additives in the concrete mixture. It also excludes transport costs associated with the delivery of residual concrete to a stationary disposal plant. The quality of the produced concrete is significantly improved, because there is no need to use polluted water in the process of producing concrete mixture from the recycled components. In addition, the quality of monolithic construction improves, because in this case it is necessary to ensure the continuous supply of a new portion of high-slump concrete until the concrete previously laid in the formwork solidifies. Using this method reduces the time from the production of concrete to its laying in the formwork. Between the main concrete layers the binding layer of fresh concrete is laid, which ensures the continuity of concreting.

### Example of device embodyment

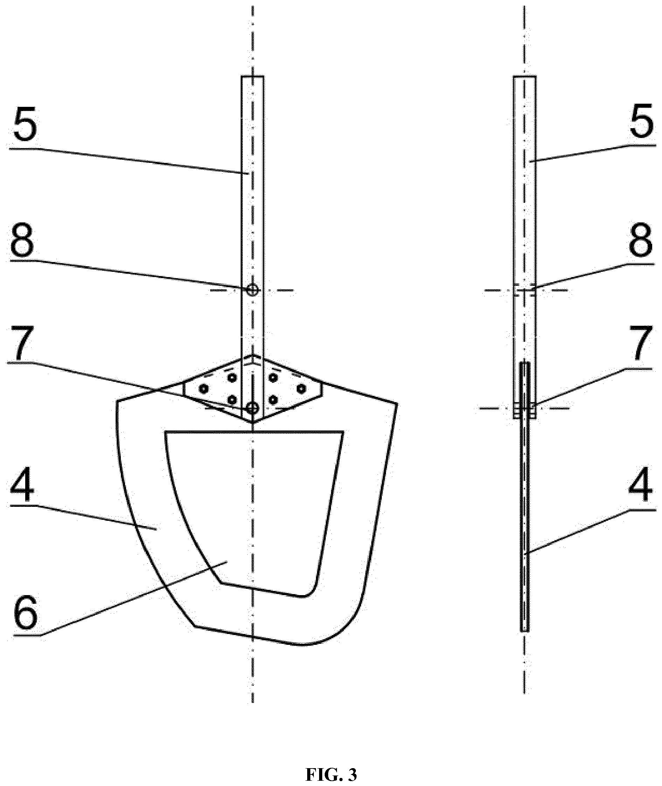

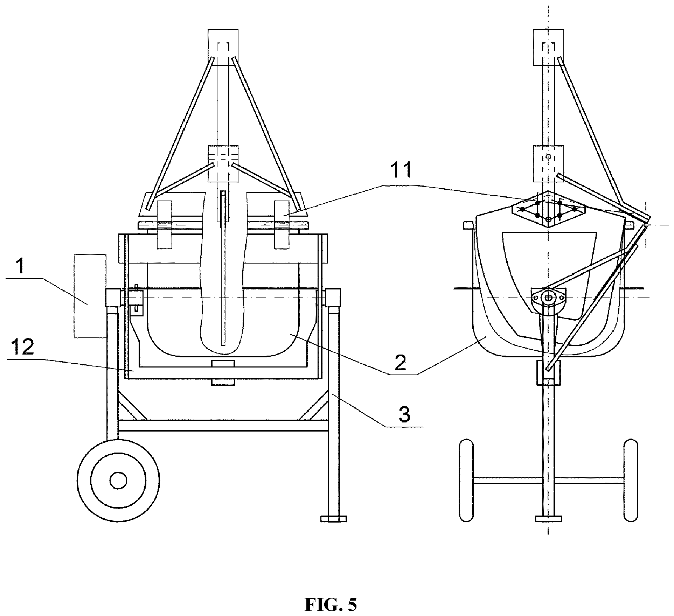

In a preferred non-limiting embodiment, the gravitational mixer contains a drive 1 for rotating the drum 2 (FIG. 5), a mixing drum 2 mounted on the support 3, a blade 4 intended for mixing the mixture and cleaning the inner surface of the drum 2 and rigidly mounted on the shaft 5. The blade 4 is made in the form of a plate with an opening 6, due to which the mixing the mixture is possible. The shaft 5 is provided with a hole 7 for a large locking pin and a hole 8 for a small locking pin (FIG. 3).

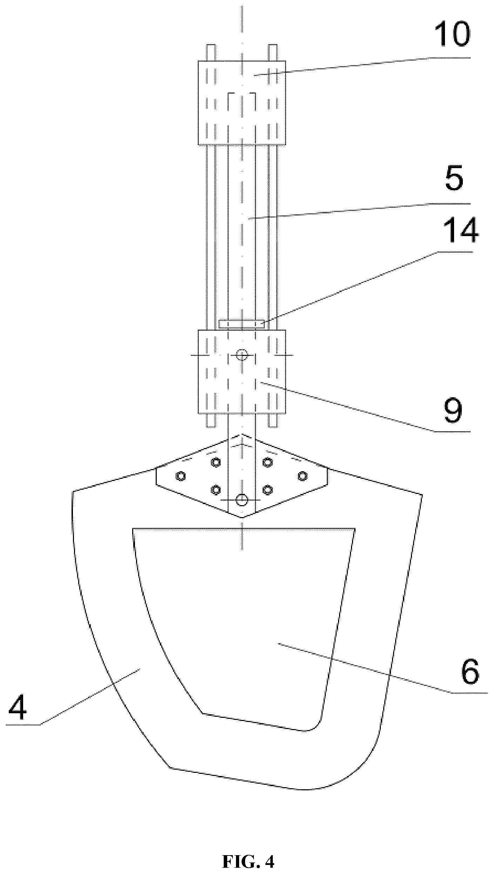

The shaft 5 is placed in the rigidly interconnected joint bearings 9, 10 (FIG. 4). The lower bearing 9 is made as the through bearing with a hole corresponding to the hole 8 in the shaft 5 of the blade 4 for the small locking pin, and the upper bearing 10 is made as the solid bearing.

The shaft 5 contains a removable fixing device 14, allowing axial rotation of the shaft 5 in bearings 9,10, but excluding the longitudinal displacement of the shaft in these bearings. Both bearings 9, 10 are attached to the drum handle 12 by means of a cylindrical hinge 11 (FIG. 5).

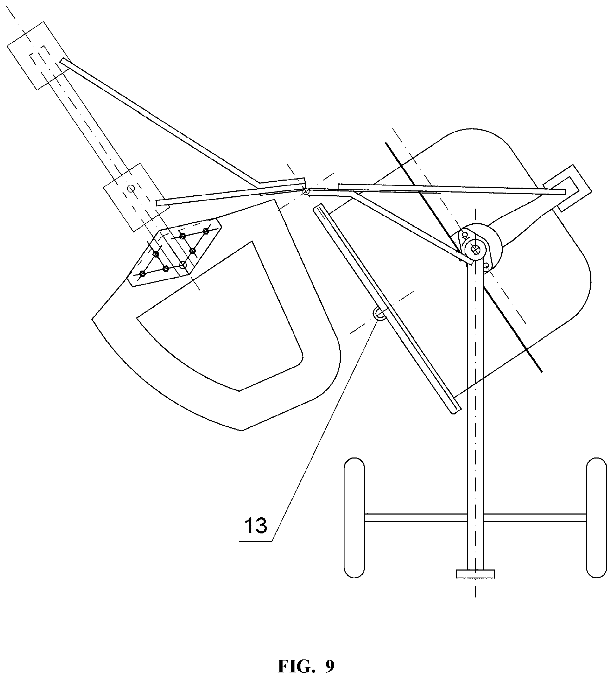

The drum 2 contains shaft fixing brackets 13 (FIG. 9) located opposite each other on the upper rim of the drum.

The design of the mixer allows to operate the blade 4 in two modes relative to the mixer drum 2: stationary mode - in the process of mixing; mobile mode - in the process of cleaning the drum 2.

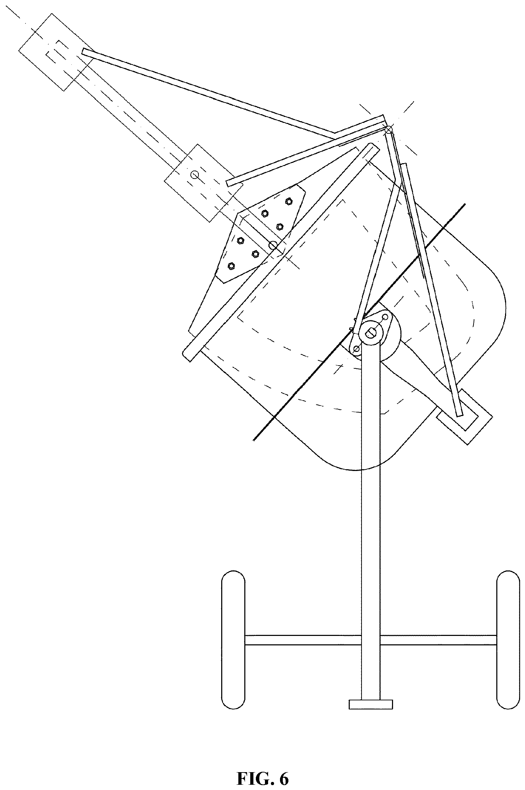

Before starting the mixer, the blade 4 is fixed in the drum 2 by installing a large locking pin in the fixing brackets 13 and the corresponding hole 7 in the shaft 5 of the blade 4. At this time between the blade 4 and the drum 2 remains a gap, preventing the position of components in the corners between the blade 4 and the inner surface of the drum 2 (FIG. 6).

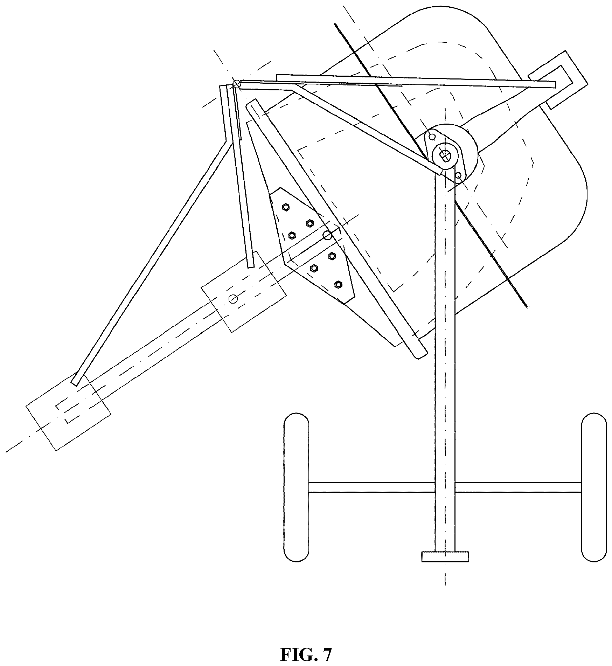

Further, the mixer is started (the drum rotates), the inert components of the mixture are loaded, and the components are mixed in the drum 2. Then the mixer is stopped, the drum 2 is tilted with the handle 12 and the produced mixture is unloaded (FIG. 7).

After unloading the produced mixture a large locking pin is removed from the shaft 5 of the mixer and the fixation brackets 13.

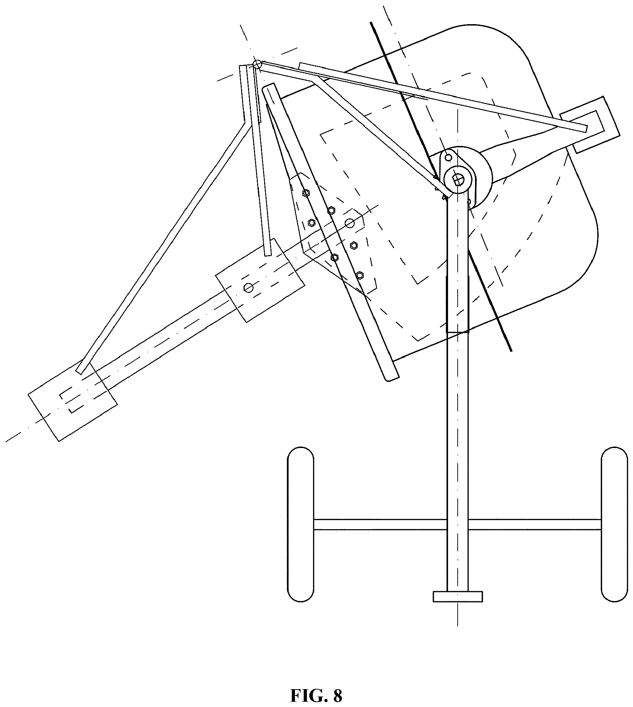

To clean the drum 2 from the residues of the produced mixture the shaft 5 is fixed with a small locking pin installed in the hole of the lower bearing 9. In this case, the blade 4 fits flush with the inner surface of the drum 2 (FIG. 8). The slope of the drum 2 corresponds to the position of unloading the produced mixture. After that, the mixer starts. The small locking pin mounted in the lower bearing 9 through the corresponding hole 8 in the shaft 5 of the blade 4, prevents the conjoint rotation of the drum 2 and the blade 4. When performing cleaning, the drum 2 rotates, and the blade 4 remains stationary.

Then the mixer is stopped, and the small locking pin is removed from the lower bearing 9. By applying the cylindrical hinge 11 the blade 4 is removed from the drum 2 (FIG. 9). The operator manually removes the residual mixture off the blade 4. After that, the drum 2 is set to its original position and the cycle repeats.

Thus, the claimed design of the mixer allows to mix the concrete mixture and to clean the inner drum surface from the residues of the produced mixture with a single blade, allowing as well to extract the blade from the drum for cleaning during the production cycle, which saves materials used to produce the mixture, and reduces costs and ecological stress associated with the disposal of production wastes.

## Claims

1. A method for producing of concrete mixture with recycling the residues of previously produced concrete mixture, wherein:
a) the inert components included in the recycled residues of concrete mixture are loaded into the tank with recycled residues of known concrete mixture in the amount specified by the process control system; using these loaded components, the mechanical cleaning of the tank walls (hereinafter referred to as "dry cleaning") from the recycled stuck residues of the concrete mixture is performed, resulting in a mixture of inert components with recycled residues of the concrete mixture (hereinafter referred to as "mixture after dry cleaning");
b) the resulting mixture after dry cleaning is loaded in the mixer from the tank and weighed, and the obtained data are fed into the process control system;
c) after dry cleaning of the tank walls, the water is poured into the emptied tank in the amount specified by the process control system to further cleaning the tank walls from recycled residues of the concrete mixture (hereinafter referred to as "wet cleaning");
d) the resulting mixture of water with recycled residues of the concrete mixture (hereinafter referred to as "mixture after wet cleaning") is loaded into the mixer, wherein the loaded mixture after dry cleaning is weighed again together with the mixture after wet cleaning, and the found total weight is fed into the process control system;
e) based on the results of weighing at the stages b) and d), and information about the loaded amount and composition of inert components and water, the process control system determines the amount of components required for the production of concrete mixture with a specific composition required for loading into the mixer;
f) additional components in the required amount are loaded into the mixer and mixed to obtain a concrete mixture.

2. The method for producing of concrete mixture using the residues of previously produced mixture according to claim 1, wherein:
at the stage "c" the chemical additives indicated in the concrete mixture specification are added to the water.

3. A mixer, containing mixing drum connected to a rotational drive and rotationally mounted on a support, wherein the mixer contains a shaft with a blade fixed on it to the mixing of the mixture and cleaning the inner drum surface, wherein the shaft is fixed by means of movable joints on the drum handle with the possibility of adjusting the gap between the blade and the inner drum surface.

4. The mixer according to claim 3, wherein the blade is made in the form of a plate with a through hole.

5. The mixer according to claim 4, wherein the outer contour of the plate at least partially repeats the shape of the inner drum surface and is configured to clean the entire inner surface of the rotating drum.

6. The mixer according to claim 3, wherein the shaft is placed in the joint bearings.

7. The mixer according to claim 6, wherein the bearings are rigidly interconnected.

8. The mixer according to claim 6, wherein the bearings are attached to the drum handle by means of a cylindrical hinge.

9. The mixer according to claim 3, wherein the drum contains shaft fixing brackets.

10. The mixer according to claim 9, wherein the shaft fixing brackets are located opposite each other on the upper rim of the drum.

11. The mixer according to claim 3, wherein in the shaft the holes for large and small locking pins are performed.

12. The mixer according to claim 6, wherein one of the bearings is performed with a hole for a small locking pin.

13. The mixer according to claim 3, wherein the shaft contains a removable fixing device that prevents longitudinal displacement of the shaft.
